# EUROPÄISCHE PATENTANMELDUNG

(11) **EP 2 778 037 A1**
(43) Veröffentlichungstag der Anmeldung: **17.09.2014**
(21) Anmeldenummer: 14159260.0
(22) Anmeldetag: 12.03.2014
(51) Int. Cl.: B62M 6/45, B62K 23/04

(54) **Fahrradgriffsystem**

(30) Priorität: 15.03.2013 DE 202013002490 U
(71) Anmelder: RTI Sports Vertrieb von Sportartikeln GmbH, 56070 Koblenz (DE)
(72) Erfinder: Krause, Andreas, 56068 Koblenz (DE); Müller, Michael, 56427 Siershahn (DE)
(74) Vertreter: Von Kreisler Selting Werner - Partnerschaft von Patentanwälten und Rechtsanwälten mbB

(57) **Zusammenfassung**

Ein Fahrradgriffsystem weist ein Griffelement (10) auf, das an einem Lenker (16) befestigbar ist. Ferner ist ein Bedienelement (18, 24) seitlich neben dem Griffelement (10) angeordnet. Das Bedienelement (18, 24) dient zum Bedienen eines elektrischen Unterstützungsmotors. Das Bedienelement weist ein Lagerelement (24) auf, auf dem ein Betätigungselement (18) drehbar ist. Mit dem Lagerelement (24) sind Schaltansätze (44) verbunden. Durch Drehen des Betätigungselements (18) betätigen die Schaltansätze (44) elektrische Schaltelemente (50).

## Beschreibung

Die Erfindung betrifft ein Fahrradgriffsystem zur Befestigung an einem Fahrradlenker.

Bei Fahrrädern mit einem elektrischen Hilfsmotor sind am Lenker Bedienelemente zum Steuern des Elektromotors angeordnet. Diese Bedienelemente sind beispielsweise klemmend am Lenker befestigt. Da es sich um Bedienelemente handelt, die unabhängig von dem Griff sind, können diese seitlich neben einem herkömmlichen Fahrradgriff an dem Lenker befestigt werden. Derartige Bedienelemente weisen den Nachteil auf, dass zur Bedienung häufig die Hand vom Fahrradgriff gelöst werden muss. Zumindest ein teilweises Lösen ist erforderlich, um beispielsweise mit dem Daumen einen Schalter an dem Bedienelement zu betätigen. Hierdurch ist die Sicherheit verringert, da beispielsweise beim Überfahren einer Bodenwelle oder dergleichen die Gefahr besteht, dass die Hand vom Lenker abrutscht. Auch ist die Ergonomie derartiger Bedienelemente nicht oder nur geringfügig auf die Handhaltung des Benutzers während des Fahrradfahrens abgestimmt.

Aufgabe der Erfindung ist es, ein Fahrradgriffsystem zu schaffen, bei dem das Bedienelement mit mindestens einem elektrischen Schalter zum Steuern eines elektrischen Unterstützungsmotors einfach betätigbar ist.

Die Lösung der Aufgabe erfolgt erfindungsgemäß durch die Merkmale des Anspruchs 1.

Das erfindungsgemäße Fahrradgriffsystem weist ein Griffelement auf, das an bzw. auf einem Fahrradlenker befestigbar ist. Insbesondere seitlich neben dem gegebenenfalls etwas kürzer als herkömmliche Griffe ausgebildete Griffelement ist erfindungsgemäß ein Bedienelement zum Bedienen eines elektrischen Unterstützungsmotors des Fahrrads angeordnet. Das Bedienelement ist in montiertem Zustand vorzugsweise innerhalb des Griffelements angeordnet, so dass vorzugsweise, ohne die Hand von dem Griffelement lösen zu müssen, ein Betätigen des Bedienelements insbesondere mit dem Daumen möglich ist. Durch das Bedienelement ist ein Verändern der Unterstützungsleistung des Unterstützungsmotors möglich. Erfindungsgemäß weist das Bedienelement ein Betätigungselement auf. Das Betätigungselement ist mit einem Lagerelement drehbar verbunden. Bspw. kann das Lagerelement hülsenförmig ausgebildet sein bzw. einen hülsenförmigen Ansatz aufweisen und auf dem Fahrradlenker mittelbar oder unmittelbar fixiert sein. Das Betätigungselement ist sodann auf dem Lagerelement drehbar. Durch ein Verdrehen des Betätigungselements auf oder in dem Lagerelement, d. h. durch ein Verdrehen des Betätigungselements relativ zu dem Lagerelement erfolgt ein Betätigen des elektrischen Schaltelements.

Dies ist erfindungsgemäß dadurch realisiert, dass in einer ersten, besonders bevorzugten Ausführungsform ein Schaltansatz an dem Betätigungselement vorgesehen ist. Durch Verdrehen des Betätigungselements relativ zu dem Lagerelement wirkt der mindestens eine Schaltansatz auf das mindestens eine elektrische Schaltelement ein. Dasselbe erfindungsgemäße Prinzip kann dadurch realisiert werden, dass der mindestens eine Schaltansatz an dem Lagerelement oder insbesondere an dem am Lenker befestigten Halteelement angeordnet ist und das mindestens eine elektrische Schaltelement, auf das der mindestens eine Schalteinsatz einwirkt an dem Betätigungselement vorgesehen ist. Relevant ist die Relativbewegung zwischen dem mindestens einen Schaltansatz und dem entsprechend mindestens einen elektrischen Schaltelement, wobei durch die Relativbewegung ein Schalten erfolgt. Erfindungsgemäß kann somit durch ein einfaches Drehen des Bedienelements um einen vorgegebenen Winkel bzw. ein Verschwenken des Bedienelements der elektrische Unterstützungsmotor hinsichtlich der Unterstützungsleistung gesteuert werden.

Bevorzugt ist es hierbei, dass das Bedienelement in zwei unterschiedliche Richtungen auf dem Lagerelement verdreht werden kann und hierdurch die Unterstützungsleistung des Unterstützungsmotors verringert oder erhöht wird. Vorzugsweise sind hierzu zwei elektrische Schaltelemente vorgesehen, wobei das eine Schaltelement zum Erhöhen und das andere Schaltelement zum Erniedrigen der Unterstützungsleistung dient. Auf die beiden elektrischen Schaltelemente können ein Schaltansatz oder auch zwei gesonderte Schaltansätze einwirken.

Das Halteelement, das in einer alternativen Ausführungsform mit dem mindestens einen Schaltansatz verbunden ist, kann Zusatzfunktionen aufweisen. Beispielsweise kann das Halteelement als Klemmelement ausgebildet sein und zur Fixierung des Lagerelements auf dem Lenker dienen.

In einer besonders bevorzugten Weiterbildung der Erfindung weist das Bedienelement ein Gleitelement auf, das drehbar auf dem Lagerelement angeordnet ist. Das Gleitelement bildet zusammen mit dem Lagerelement in dieser Ausführungsform ein Gleitlager. Alternativ können zwischen diesen beiden Elementen auch Wälzkörper wie Kugeln angeordnet sein. Besonders bevorzugt ist, dass das Lagerelement einen zylindrischen Innendurchmesser aufweist, der im Wesentlichen dem Außendurchmesser des Fahrradlenkers entspricht, so dass das Lagerelement auf einfache Weise auf dem Fahrradlenker beispielsweise mit Hilfe eines Klemmmittels wie einer Schelle oder dergleichen fixiert werden kann. Das Fixieren des Lagerelements kann auch durch Verbindung mit dem Griffelement, das sodann auf dem Fahrradlenker fixiert ist, erfolgen. Eine bevorzugte Ausführungsform der die Gleitfläche bildende Außenseite des Lagerelements ist vorzugsweise ebenfalls im Wesentlichen zylindrisch ausgebildet. Entsprechend ist es auch bevorzugt, dass das Gleitelement eine im Wesentlichen zylindrische in Richtung des Lagerelements weisende Innenseite aufweist. Bevorzugt ist es hierbei, dass das Gleitelement einstückig mit dem Bedienelement ausgebildet, insbesondere als Spritzgussteil ausgeführt ist.

Bei einer weiteren bevorzugten Ausführungsform ist der mindestens eine Schaltansatz mit dem Lagerelement oder dem Halteelement verbunden und ragt in das Bedienelement. Hierzu ist es des Weiteren bevorzugt, dass eine Seitenwand des Bedienelements mindestens eine schlitzförmige Öffnung aufweist durch das mindestens eine Schaltelement ragt. Bei Vorsehen von mindestens zwei Schaltelementen ist es bevorzugt, je Schaltelement eine schlitzförmige Öffnung vorzusehen. Bei dieser bevorzugten Ausführungsform kann das Bedienelement entsprechend eines Gehäuses hohl ausgebildet sein, so dass der mindestens eine Schaltansatz zwischen einer Außenwand des Gehäuses und dem Gleitelement angeordnet ist. Hierdurch kann eine kompakte Bauweise realisiert werden.

Bei einem insbesondere gehäuseartig ausgebildeten Bedienelement ist es des Weiteren bevorzugt, dass mindestens ein insbesondere die beiden Schaltelemente innerhalb des Bedienelements angeordnet sind. Bevorzugt ist hierbei die Anordnung an einer Innenseite einer Außenwand des Bedienelements.

Um eine möglichst einfache Betätigung des Bedienelements insbesondere ein einfaches Verdrehen des Bedienelements auf dem Lagerelement zu ermöglichen weist das Bedienelement eine Schaltmulde auf. Diese ist in montiertem Zustand insbesondere in Richtung des Benutzers ausgerichtet, so dass ohne die Hand von dem Fahrradgriff zu lösen ein Betätigen des Bedienelements mit dem Daumen über die entsprechende Schaltmulde auf einfache möglich ist. Insbesondere ist es bevorzugt, dass der mindestens eine Schaltansatz im Wesentlichen der Schaltmulde gegenüberliegend angeordnet ist. Dies hat insbesondere bei der Ausführungsform, bei der der Schaltansatz mit dem Lagerelement oder dem Halteelement verbunden ist den Vorteil, dass für den mindestens einen Schaltansatz im Bereich der Schaltmulde kein Raum vorgesehen sein muss. Das Bedienelement kann somit im Bereich der Schaltmulde ergonomisch und platzsparend ausgebildet sein. Im vom Benutzer weg weisenden Bereich des Bedienelements ist in bevorzugter Ausführungsform ausreichend Platz. Anstatt einer Schaltmulde kann bspw. auch ein Schaltansatz, der insbesondere den in die Richtung des Benutzers weist und insbesondere mit dem Daumen betätigbar ist, vorgesehen sein.

Nachfolgend wird die Erfindung anhand einer bevorzugten Ausführungsform unter Bezugnahme auf die anliegenden Zeichnungen näher erläutert.

Es zeigen:
- Fig. 1: eine schematische Draufsicht eines Fahrradgriffs zusammen mit einem Bedienelement,
- Fig. 2: eine schematische Draufsicht des Lagerelements,
- Fig. 3: eine schematische Seitenansicht des Lagerelements in Richtung des Pfeils III in Fig. 2 und
- Fig. 4: eine schematische Schnittansicht des Bedienelements sowie des Lagerelements entlang der Linie IV - IV in Fig. 1.

Bei einer bevorzugten Ausführungsform des erfindungsgemäßen Fahrradgriff-Systems ist ein Griffelement 10 vorgesehen. Das Griffelement 10 weist einen Ansatz 12 zum Aufstützen des Handtellers auf und ist über ein Klemmmittel 14 am Fahrradlenker befestigt. Ein derartiges Griffelement ist beispielsweise in EP 1 537 014 beschrieben. Die Führung des Griffelements an einem Lenker 16 erfolgt über das Klemmmittel 14. Auf einer bezogen auf das Griffelement 10 inneren Seite ist ein Betätigungselement 18 angeordnet. Das Betätigungselement 18 ist zumindest teilweise um den Lenker 16 herum verschwenk- bzw. verdrehbar. Hierdurch erfolgt ein Schalten eines elektrischen Schalters zur Steuerung eines über ein Kabel 20 mit dem Bedienelement verbundenen Unterstützungsmotors. Die Verbindung kann auch drahtlos erfolgen. Das Drehen des Betätigungselements 18 erfolgt in dem dargestellten Ausführungsbeispiel mit Hilfe eines in eine Schaltmulde 22 des Betätigungselements eingelegten Daumens und Bewegen des Daumens nach oben oder unten.

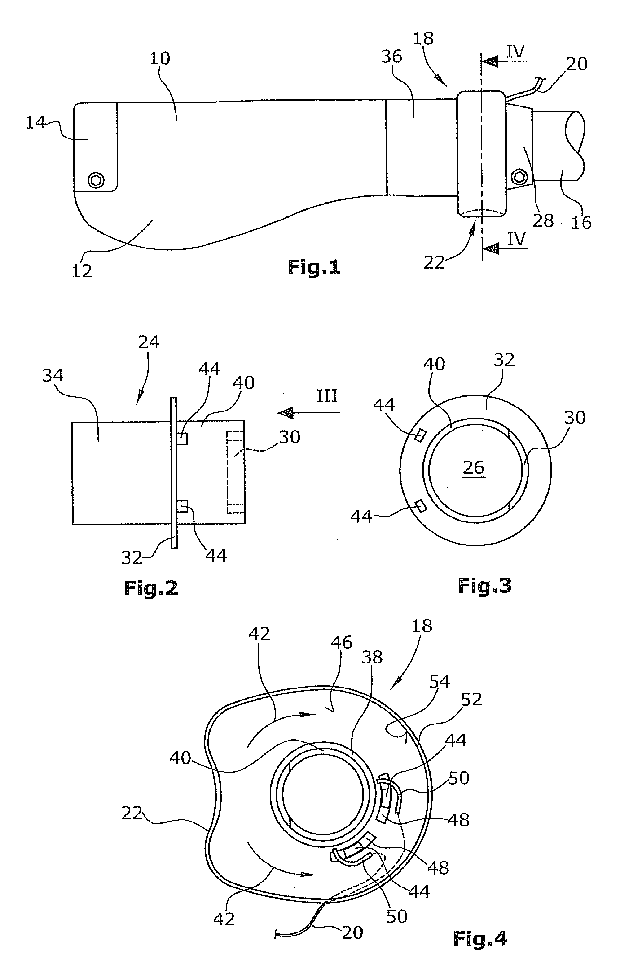

Das Betätigungselement 18 ist auf einem Lagerelement 24 (Fig. 2) angeordnet. Das Lagerelement 24 weist eine den Außendurchmesser des Lenkers 16 aufweisende zylindrische Öffnung 26 (Fig. 3) auf. Mit Hilfe eines als Klemme ausgebildeten Halteelements 28 (Fig. 1) in Zusammenwirkung mit einer Ausnehmung 30 in dem Lagerelement kann ein klemmendes Fixieren des Lagerrings auf dem Lenker 16 erfolgen. Auf einer in Fig. 2 rechten bzw. inneren Seite eines kreisringförmigen Anlagerings 32 ist das Betätigungselement 18 angeordnet. Ein gegenüberliegender zylindrischer Teil 34 des Lagerelements 24 ragt entweder unmittelbar in das Griffelement 10 oder ist teilweise von einem weiteren im Wesentlichen zylindrischen Griffteil 36 umgeben, so dass der zylindrische Ansatz 34 nur teilweise in das Griffelement 10 ragt. In dem zylindrischen Griffteil 36 können bspw. weitere Elektronikbauteile oder dgl. untergebracht sein.

Das Betätigungselement 18 weist im dargestellten Ausführungsbeispiel einen inneren zylindrischen, ein Gleitelement ausbildenden Ansatz 38 auf. Dieser umgibt den zylindrischen Ansatz 40 des Lagerelements 24, so dass ein Verdrehen bzw. Verschwenken des Bestätigungselements 18 auf dem zylindrischen Ansatz 40 des Lagerelements 24 entsprechend der Pfeile 42 möglich ist. Das Betätigen des Betätigungselements 18 erfolgt im dargestellten Ausführungsbeispiel mit Hilfe des Daumens, der in die Mulde 22 gelegt wird.

An dem kreisförmigen Anlagering 32 des Lagerelements 24 sind im dargestellten Ausführungsbeispiel zwei Schaltansätze 44 vorgesehen, die in das Betätigungselement 18 ragen. Hierzu sind in einer Seitenwand 46 des Betätigungselements 18 Schlitze 48 vorgesehen. Des Weiteren sind innerhalb des Betätigungselements 18 zwei elektrische Schaltelemente 50 angeordnet. Diese sind mit dem Kabel 20 verbunden. Die elektrischen Schaltelemente 50 sind in dem dargestellten Ausführungsbeispiel zwischen dem Gleitelement 38 und einer Außenwand 52 des Betätigungselements 18 angeordnet. Insbesondere sind die elektrischen Schaltelemente 50 an einer Innenseite 54 der Außenwand 52 befestigt. Das Betätigungselement 18 kann durch einen der Seitenwand 46 gegenüberliegenden, nicht dargestellten Deckel verschlossen werden.

Ein Verdrehen des Bedienelements 48 in Richtung eines der beiden Pfeile 42 bewirkt ein Verdrehen der mit dem Betätigungselement 18 verbundenen elektrischen Schaltelemente 50. Hierdurch gelangt eines der beiden elektrischen Schaltelemente 50 mit einem der beiden Schaltansätze 44 in Kontakt, wobei die Schaltansätze 44 aufgrund ihrer Verbindung mit dem Lagerelement 24 stationär sind. Hierdurch kann ein elektrischer Kontakt ausgelöst und ein entsprechendes Schaltsignal erzeugt werden.

## Patentansprüche

1. Fahrradgriff-System, mit
einem neben einem Griffelement (10) an einem Fahrradlenker (16) befestigbaren Bedienelement (18, 24) zum Bedienen eines elektrischen Unterstützungsmotors,
**dadurch gekennzeichnet, dass**
das Bedienelement ein auf einem Lagerelement (24) drehbares Betätigungselement (18) aufweist und
dass mindestens ein Schaltansatz (44) an dem Betätigungselement (18), dem Lagerelement (24) oder einem an dem Lenker (16) befestigbaren Halteelement (28) vorgesehen ist, wobei der mindestens eine Schaltansatz (44) durch Verdrehen des Betätigungselements (18) relativ zum Lagerelement (24) auf ein elektrisches Schaltelement (54) einwirkt.

2. Fahrradgriffsystem nach Anspruch 1, **dadurch gekennzeichnet, dass** das elektrische Schaltelement (50) mit dem Betätigungselement (18), dem Lagerelement (24) oder dem Halteelement (28) verbunden ist.

3. Fahrradgriffsystem nach Anspruch 1 oder 2, **dadurch gekennzeichnet, dass** das Betätigungselement (18) das insbesondere zylindrisch ausgebildete Lagerelement (24) umgibt und vorzugsweise ein insbesondere zylindrisch ausgebildetes, auf dem Lagerelement (24) drehbar angeordnetes Gleitelement (38) aufweist.

4. Fahrradgriffsystem nach einem der Ansprüche 1 bis 3, **dadurch gekennzeichnet, dass** der mindestens eine Schalteinsatz (44) mit dem Lagerelement (24) oder dem Halteelement (28) verbunden ist und in das Betätigungselement (18) ragt.

5. Fahrradgriffsystem nach Anspruch 4, **dadurch gekennzeichnet, dass** eine Seitenwand (46) des Betätigungselements eine schlitzförmige Öffnung (48) aufweist durch die das mindestens eine Schaltelement (44) ragt.

6. Fahrradgriffsystem nach einem der Ansprüche 3 bis 5, **dadurch gekennzeichnet, dass** das mindestens eine Schaltelement (54) radial zwischen dem Gleitelement (38) und einer Außenwand (52) des Betätigungselements (18) angeordnet ist.

7. Fahrradgriffsystem nach einem der Ansprüche 1 bis 6, **dadurch gekennzeichnet, dass** das elektrische Schaltelement (50) innerhalb des Betätigungselements (18), insbesondere an einer Innenseite (54) einer Außenwand (52) des Betätigungselements (18) angeordnet ist.

8. Fahrradgriffsystem nach einem der Ansprüche 1 bis 7, **dadurch gekennzeichnet, dass** das Betätigungselement (18) zum Verdrehen gegenüber dem Lagerelement (24) eine Schaltmulde (22) aufweist.

9. Fahrradgriffsystem nach Anspruch 8, **dadurch gekennzeichnet, dass** der mindestens eine Schaltansatz (44) im Wesentlichen der Schaltmulde (22) gegenüberliegend angeordnet ist.
